# EUROPEAN PATENT APPLICATION

(11) **EP 3 376 410 A1**
(43) Date of publication of application: **19.09.2018**
(21) Application number: 18155263.9
(22) Date of filing: 06.02.2018
(51) Int. Cl.: G06F 17/30

(54) **METHOD OF SEARCHING INFORMATION, INFORMATION PROCESSING APPARATUS AND NON-TRANSITORY COMPUTER-READABLE STORAGE MEDIUM**

(30) Priority: 13.03.2017 JP 2017047441
(71) Applicant: FUJITSU LIMITED, Kanagawa 211-8588 (JP)
(72) Inventor: Sato, Yoichi, Aomori, 030-0823 (JP)
(74) Representative: Hoffmann Eitle

(57) **Abstract**

A method of searching information performed by a computer, the method includes obtaining a plurality of terms, performing a first search on each of the obtained plurality of terms, executing determination processing to determine whether an image is detected for each of the plurality of terms in the first search, based on a result of the determination processing, identifying a first term among from the plurality of terms for which the image is detected in the first search, and a second term among from the plurality of terms for which the image is not detected in the first search, performing a second search based on the identified first term, and obtaining information detected by the second search.

## Description

### TECHNICAL FIELD

The embodiments discussed herein are related to a method of searching information, an information processing apparatus and a non-transitory computer-readable storage medium.

### BACKGROUND ART

When planning a trip, in some cases, searches are performed in order to look up information on a sightseeing spot of a desired area to visit, for example. If the user who performs searches does not know what kind of sightseeing spots are there in the area, the user may perform searches by non-specific keywords such as a prefecture name and "sightseeing", for example.

A conventionally proposed method of searching includes, for example, when searching a document database for a document, acquiring a related-term group corresponding to frequency of inputted search terms being detected, associating the document searched for with the acquired related-term group, and displaying them as a list. In addition, an approach having been proposed includes, for example, extracting a search keyword by analyzing an inquiry inputted by the user, categorizing the search keyword into a major type or a minor type, and, based on the categorization result, obtaining a search result with similarity ranking. There are Japanese Laid-open Patent Publication Nos. 2004-021915 and 2004-139553 as prior art documents.

### SUMMARY

### [TECHNICAL PROBLEMS]

However, for example, when a non-specific keyword or search term is used for searching, it is impossible for the search term to be distinguished among search target contents. This may lead to complete opposite results; the most of the contents come up, or nothing comes up. Thus, for obtaining a desired search result, the user performs searches repeatedly oneself by combining search terms, and categorizes search terms oneself for obtaining a good search result. Accordingly, this involves considerable efforts to obtain an appropriate search term.

### [Solution to Problem]

According to an aspect of the invention, a method of searching information performed by a computer, the method includes obtaining a plurality of terms, performing a first search on each of the obtained plurality of terms, executing determination processing to determine whether an image is detected for each of the plurality of terms in the first search, based on a result of the determination processing, identifying a first term among from the plurality of terms for which the image is detected in the first search, and a second term among from the plurality of terms for which the image is not detected in the first search, performing a second search based on the identified first term, and obtaining information detected by the second search.

### [Advantages]

A search term may be categorized.

### BRIEF DESCRIPTION OF DRAWINGS

FIG. 1 is a block diagram that illustrates an example of a configuration of an information processing system of Embodiment 1;
FIG. 2 is a diagram that illustrates an example of a sightseeing information storage unit;
FIG. 3 is a flowchart that illustrates an example of search term categorization processing of Embodiment 1;
FIG. 4 is a block diagram that illustrates an example of a configuration of an information processing system of Embodiment 2;
FIG. 5 is a flowchart that illustrates an example of search term categorization processing of Embodiment 2; and
FIG. 6 is a diagram that illustrates an example of a computer that executes a search term categorization program.

### DESCRIPTION OF EMBODIMENTS

Hereinafter, based on the drawings, embodiments of a search term categorization program, a search term categorization method, and an information processor disclosed in the present application are described in detail. Note that the embodiments are not intended to limit the disclosed technique. In addition, the following embodiments may be suitably combined with each other without contradiction.

### [Embodiment 1]

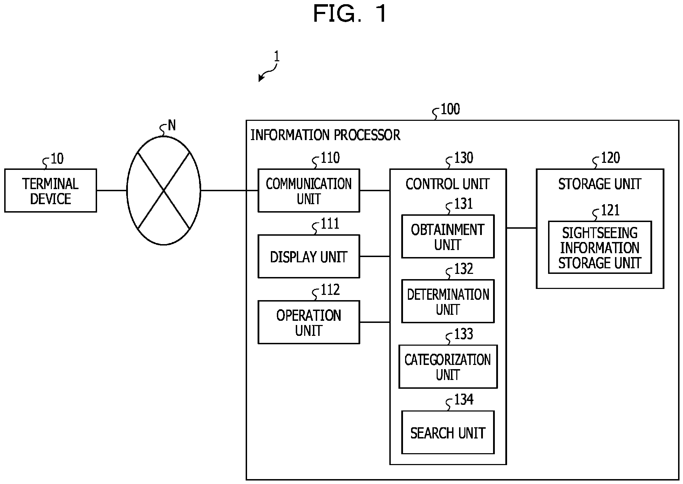

FIG. 1 is a block diagram that illustrates an example of a configuration of an information processing system of Embodiment 1. An information processing system 1 has a terminal device 10 and an information processor 100. Note that the number of the terminal device 10 is not limited, and the information processing system 1 may have any number of the terminal devices 10. The terminal device 10 and the information processor 100 are communicably coupled with each other via a network N. Any type of wired or wireless communication network may be employed as the network N such as the Internet, a local area network (LAN), and a virtual private network (VPN).

The terminal device 10 is, for example, an information processor for the user to use a sightseeing information search service provided by the information processor 100. A stationary or portable personal computer and the like may be used as the terminal device 10. A mobile communication terminal such as a tablet terminal and a smartphone may also be used as the terminal device 10. For example, using the terminal device 10, the user inputs a search term for searching for sightseeing information into a search screen of the search service provided by the information processor 100. The terminal device 10 transmits the inputted search term to the information processor 100 via the network N. In addition, the terminal device 10 receives a search result from the information processor 100 via the network N. The terminal device 10 displays the received search result and provides the user with the search result.

The information processor 100 is an information processor that obtains a related-term that relates to the search term accepted from the terminal device 10 and categorizes the search term and the related-term. The information processor 100 obtains multiple terms. The information processor 100 determines whether an image is detected by searching for each of the obtained multiple terms. In accordance with the determination result, the information processor 100 categorizes the multiple terms. In this way, the information processor 100 is able to categorize the search term.

Next, a configuration of the information processor 100 is described. As illustrated in FIG. 1, the information processor 100 has a communication unit 110, a display unit 111, an operation unit 112, a storage unit 120, and a control unit 130. Other than the functional units illustrated in FIG. 1, note that the information processor 100 may have some types of functional units in a known computer such as some types of input devices, audio output devices, and the like, for example.

The communication unit 110 is implemented by a network interface card (NIC) and the like, for example. The communication unit 110 is a communication interface that is coupled to the terminal device 10 via the network N wired or wirelessly and takes charge of information communication between the terminal device 10 and the information processor 100. The communication unit 110 transmits the search screen, the search result, and the like, which are inputted from the control unit 130, to the terminal device 10. In addition, the communication unit 110 outputs the search term received from the terminal device 10 to the control unit 130.

The display unit 111 is a display device for displaying some types of information to a manager of the information processor 100. The display unit 111 is implemented as a display device by a liquid crystal display and the like, for example. The display device 111 displays some types of screens such as the display screen inputted from the control unit 130.

The operation unit 112 is an input device that accepts some types of operations from the manager of the information processor 100. The operation unit 112 is implemented as the input device by a keyboard, a mouse, and the like, for example. The operation unit 112 outputs the operation inputted by the manager to the control unit 130 as operation information. Note that the operation unit 112 may be implemented as the input device by a touch panel and the like, and the display device of the display unit 111 and the input device of the operation unit 112 may be integrated with each other.

The storage unit 120 is implemented by a semiconductor memory device such as a random access memory (RAM) and a flash memory as well as a storage device such as a hard disk and an optical disk, for example. The storage unit 120 has a sightseeing information storage unit 121. The storage unit 120 stores information that is used for processing in the control unit 130.

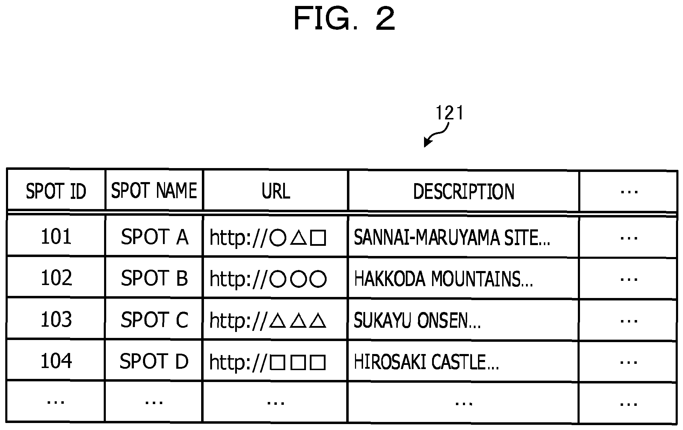

The sightseeing information storage unit 121 associates a sightseeing spot with, for example, a description of the sightseeing spot obtained from a webpage related to the sightseeing spot, and stores them. FIG. 2 is a diagram that illustrates an example of the sightseeing information storage unit. As illustrated in FIG. 2, the sightseeing information storage unit 121 has items such as "spot identifier (ID)", "spot name", "uniform resource locator (URL)", and "description". The sightseeing information storage unit 121 stores a record in every spot ID, for example.

"Spot ID" is an identifier that identifies a webpage introducing a sightseeing spot. Note that, for example, when there are multiple webpages introducing the same sightseeing spot, "spot ID" identifies them by giving different spot IDs thereto. "Spot name" is information indicating a name of the sightseeing spot. "URL" is information indicating a URL of the webpage. Note that "URL" may be a uniform resource identifier (URI). "Description" is a description of the sightseeing spot obtained from the webpage, that is, information indicating the sightseeing information. The example in the first line in FIG. 2 indicates that a webpage introducing a spot name "spot A" of a spot ID "101" has a URL "http://OΔ□", and a description obtained from the webpage is "Sannai-Maruyama site ...".

Returning to the description of FIG. 1, the control unit 130 is implemented by, for example, a central processing unit (CPU), a micro processing unit (MPU), and the like that execute a program stored in the internal storage in the RAM as a work area. The control unit 130 may also be implemented by, for example, an integrated circuit such as an application specific integrated circuit (ASIC) and a field programmable gate array (FPGA). The control unit 130 has an obtainment unit 131, a determination unit 132, a categorization unit 133, and a search unit 134, and implements or executes the functions and operations of the later-described information processing. Note that the internal configuration of the control unit 130 is not limited to the configuration illustrated in FIG. 1, and may be another configuration as long as that configuration performs the later-described information processing.

The obtainment unit 131 obtains a related-term that relates to the search term accepted from the terminal device 10, for example. The obtainment unit 131 transmits the search screen of the search service to the terminal device 10 via the communication unit 110 and the network N. Once receiving the search term from the terminal device 10 via the network N and the communication unit 110, the obtainment unit 131 accepts the received search term. The obtainment unit 131 searches an unillustrated search engine by the accepted search term. Note that there may be one or two search terms, for example. As a result of the search, the obtainment unit 131 obtains multiple related-terms that relate to the search term. The obtainment unit 131 outputs the obtained multiple related-terms to the determination unit 132 together with the search term.

In other words, the obtainment unit 131 obtains multiple terms. In addition, the obtainment unit 131 uses the inputted term to search for a term related to the inputted term and obtains the inputted term and the multiple related-terms as the search result.

Once the search term and the related-terms are inputted from the obtainment unit 131, the determination unit 132 selects one term out of the search term and the related-terms. The determination unit 132 searches for the selected search term or related-term on a predetermined term search website. The predetermined term search website may be, for example, a website of an encyclopedia and the like, such as Wikipedia (registered mark), in which a description with an image is given for a material object. The determination unit 132 searches the term search website and extracts an image that is associated with the search term or the related-term. In other words, the determination unit 132 does not extract a common image throughout webpages of terms of the term search website because that image is not associated with the search term or the related-term. That is, when there is an image in an area given with a description of a term of the term search website or an area in which an image related to a term is placed in advance, the determination unit 132 extracts that image as an image associated with the search term or the related-term.

For example, when there is an IMG tag in an area given with a description of hypertext markup language (HTML) of a webpage of a term or an area in which an image related to a term is placed in advance, the determination unit 132 extracts an image specified by the IMG tag. Note that the image includes not only a still image but also a moving image. In other words, the image extracted by the determination unit 132 is an image associated with a page corresponding to the search term or the related-term in the predetermined term search website. The determination unit 132 outputs the search term or the related-term as well as success or failure of the image extraction to the categorization unit 133.

Once an unsearch determination instruction is inputted from the categorization unit 133, the determination unit 132 determines whether there is an unsearched search term or related-term. When it is determined that there is an unsearched search term or related-term, the determination unit 132 selects a next search term or related-term from the search term group and the related-term group, and returns to the processing of searching the predetermined term search website. When it is determined that all of the search term and related-terms are searched for, the determination unit 132 outputs a search instruction to the search unit 134.

In other words, the determination unit 132 determines whether an image is detected by searching for each of the obtained multiple terms. The search for determining whether an image is detected is performed on the predetermined term search website.

Based on the search term or the related-term as well as the success or failure of the image extraction inputted from the determination unit 132, the categorization unit 133 categorizes the inputted search term or related-term. When the categorization unit 133 categorizes the search term or the related-term as the one that does not allow the image extraction, it is assumed that the search term or the related-term is an immaterial conceptual term. In this case, the categorization unit 133 destroys the search term or the related-term and outputs the unsearch determination instruction to the determination unit 132 so that the determination unit 132 determines whether there is an unsearched search term or related-term.

When the categorization unit 133 categorizes the search term or the related-term as the one that allows the image extraction, it is assumed that the search term or the related-term is a material search term. In this case, the categorization unit 133 temporarily stores the material search term or related-term as a material search term group into the storage unit 120, and outputs the unsearch determination instruction to the determination unit 132 so that the determination unit 132 determines whether there is an unsearched search term or related-term. In other words, the categorization unit 133 categorizes the search term or the related-term by temporarily storing the material search term or related-term as the material search term group into the storage unit 120 and destroying the immaterial search term or related-term.

In other words, in accordance with the determination result from the determination unit 132, the categorization unit 133 categorizes multiple terms. The multiple terms are searched for as the inputted term or as terms related to the inputted term.

Once the search instruction is inputted from the determination unit 132, the search unit 134 obtains the material search term group that is temporarily stored in the storage unit 120. The search unit 134 searches the sightseeing information storage unit 121 by the obtained material search term group. The search unit 134 transmits the search result to the terminal device 10 via the communication unit 110 and the network N.

In other words, the search unit 134 performs a search for sightseeing information by the term out of the multiple terms that is categorized as a term that allows an image to be detected by searching for the term. The sightseeing information is a sightseeing spot.

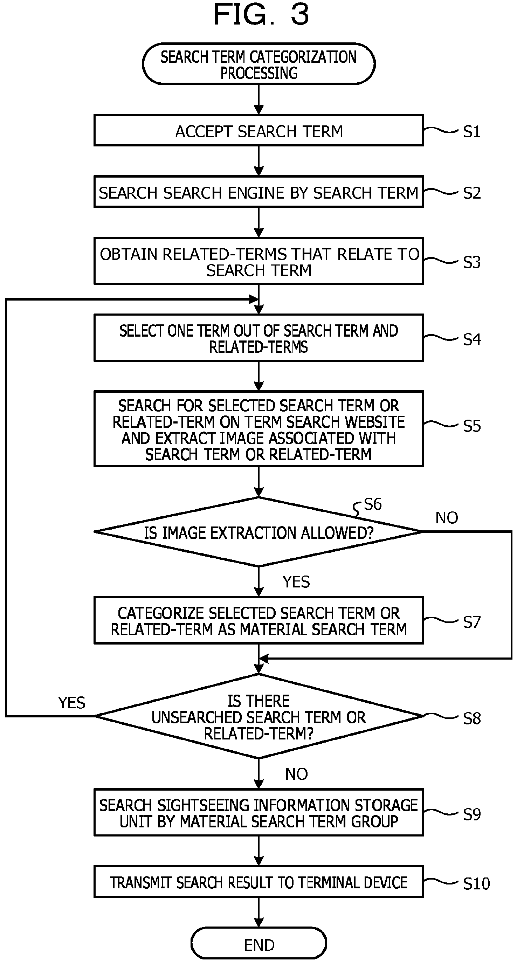

Next, an operation of the information processor 100 of Embodiment 1 is described. FIG. 3 is a flowchart that illustrates an example of search term categorization processing of Embodiment 1.

Once a search term is inputted from the user, the terminal device 10 transmits the inputted search term to the information processor 100. Once receiving the search term from the terminal device 10, the obtainment unit 131 of the information processor 100 accepts the received search term (step S1). The obtainment unit 131 searches the unillustrated search engine by the accepted search term (step S2). As a result of the search, the obtainment unit 131 obtains multiple related-terms that relate to the search term (step S3). The obtainment unit 131 outputs the obtained multiple related-terms to the determination unit 132 together with the search term.

Once the search term and the related-terms are inputted from the obtainment unit 131, the determination unit 132 selects one term out of the search term and the related-term (step S4). The determination unit 132 searches for the selected search term or related-term on the predetermined term search website, and extracts an image associated with the search term or the related-term (step S5). The determination unit 132 outputs the search term or the related-term as well as the success or failure of the image extraction to the categorization unit 133.

Based on the search term or the related-term as well as the success or failure of the image extraction inputted from the determination unit 132, the categorization unit 133 categorizes the search term or the related-term. In other words, the categorization unit 133 determines whether the search term allows the image extraction (step S6). When it is determined that the image extraction is not allowed (step S6: No), the categorization unit 133 destroys the selected search term or related-term since it is assumed to be an immaterial conceptual term, and outputs the unsearch determination instruction to the determination unit 132. Then the process proceeds to step S8.

When it is determined that the image extraction is allowed (step S6: Yes), since the selected search term or the related-term is a material search term, the categorization unit 133 temporarily stores that search term or related-term as the material search term group into the storage unit 120 (step S7). In addition, the categorization unit 133 outputs the unsearch determination instruction to the determination unit 132 so that the determination unit 132 determines whether there is an unsearched search term or related-term. Then the process proceeds to step S8.

Once the unsearch determination instruction is inputted from the categorization unit 133, the determination unit 132 determines whether there is an unsearched search term or related-term (step S8). When the determination unit 132 determines that there is an unsearched search term or related-term (step S8: Yes), the process returns to step S4. When the determination unit 132 determines that all of the search term and related-terms are searched for (step S8: No), the determination unit 132 outputs the search instruction to the search unit 134.

Once the search instruction is inputted from the determination unit 132, the search unit 134 obtains the material search term group that is temporarily stored in the storage unit 120. The search unit 134 searches the sightseeing information storage unit 121 by the obtained material search term group (step S9). The search unit 134 transmits the search result to the terminal device 10 (step S10). In this way, the information processor 100 is able to categorize the search term. In other words, the information processor 100 may provide the user of the terminal device 10 with a material search result as sightseeing information. In addition, the information processor 100 may provide that user with a search result that meets potential demands of the user. That is, even when the user has difficulty in translating desired information into a search term, the information processor 100 may provide the user with the desired information.

Now, search term categorization processing is described with a specific example. First of all, once a search term "Aomori" is inputted by the user, the terminal device 10 transmits the search term "Aomori" to the information processor 100. Once receiving the search term "Aomori", the obtainment unit 131 of the information processor 100 accepts the search term "Aomori". The obtainment unit 131 performs a search on the unillustrated search engine by the accepted search term "Aomori". As a result of the search, the obtainment unit 131 obtains multiple related-terms that relate to the search term "Aomori", such as "attraction", "recommended information", "Hakkoda Mountains", and "Sukayu Onsen", for example. Note that these four are used as the related-terms in the following description. The obtainment unit 131 outputs the obtained multiple related-terms "attraction", "recommended information", "Hakkoda Mountains", and "Sukayu Onsen" to the determination unit 132 together with the search term "Aomori".

The search term "Aomori" as well as the related-terms "Aomori prefecture", "attraction", "recommended information", "Hakkoda Mountains", and "Sukayu Onsen" are inputted from the obtainment unit 131 to the determination unit 132. The determination unit 132 selects each one of these inputted terms and searches for the term on the predetermined term search website such as Wikipedia (registered mark). Out of the webpages respectively explaining those terms, the webpages of "Aomori prefecture", "Hakkoda Mountains", and "Sukayu Onsen" have photos; thus, the determination unit 132 generates information indicating the success of the image extraction. In some cases, as a result of the search on the term search website, "attraction" and "recommended information" have no webpages for explaining these terms, but each webpage is a list of webpages with description contents including these terms. In this case, the determination unit 132 generates information indicating the failure of the image extraction.

When the determination unit 132 searches for "Aomori" on the term search website, in some cases, a webpage of disambiguation is displayed. In this case, for example, the determination unit 132 may make determination on the webpage that comes up by selecting the first item on the list, "Aomori prefecture", whether the image extraction is allowed. Note that, in the case of this specific example, once the first item "Aomori prefecture" is selected, the information indicating the success of the image extraction is generated since the webpage explaining "Aomori prefecture" includes a photo. The determination unit 132 outputs the search term or the related-terms "Aomori", "Aomori prefecture", "attraction", "recommended information", "Hakkoda Mountains", and "Sukayu Onsen" to the categorization unit 133 in order, together with the success or failure of the image extraction.

Once the search term "Aomori" and "extraction succeeded" are inputted from the determination unit 132, the categorization unit 133 categorizes "Aomori" as a material search term and temporarily stores it as the material search term group into the storage unit 120. Likewise, the categorization unit 133 categorizes the related-terms "Aomori prefecture", "Hakkoda Mountains", and "Sukayu Onsen" as the material search terms and temporarily stores them as the material search term group into the storage unit 120.

Once the related-term "attraction" and "extraction failed" are inputted from the determination unit 132, the categorization unit 133 categorizes "attraction" as an immaterial conceptual term and destroys the related-term "attraction" without storing it as the material search term group. Likewise, the categorization unit 133 categorizes the related-term "recommended information" as an immaterial conceptual term and destroys the related-term "recommended information".

Once the determination on the search term and the related-terms "Aomori", "Aomori prefecture", "attraction", "recommended information", "Hakkoda Mountains", and "Sukayu Onsen" whether the image extraction allowed is over, the determination unit 132 outputs the search instruction to the search unit 134.

Once the search instruction is inputted from the determination unit 132, the search unit 134 obtains the material search term group that is temporarily stored in the storage unit 120. The material search term group includes "Aomori", "Aomori prefecture", "Hakkoda Mountains", and "Sukayu Onsen". The search unit 134 searches the sightseeing information storage unit 121 by the obtained material search term group. The search unit 134 obtains, for example, information on the sightseeing spots "Hakkoda Mountains" and "Sukayu Onsen" as the search result and transmits the search result to the terminal device 10. In this way, the information processor 100 is able to provide the user of the terminal device 10 with a material search result as sightseeing information.

In this way, the information processor 100 obtains multiple terms. In addition, the information processor 100 determines whether an image is detected by searching for each of the obtained multiple terms. Moreover, in accordance with the determination result, the information processor 100 categorizes the multiple terms. As a result, the information processor 100 is able to categorize the search term.

In the information processor 100, a search is performed on the predetermined term search website. As a result, the information processor 100 is able to categorize a term that allows an image to be detected on the predetermined term search website.

In addition, the information processor 100 performs a search for the sightseeing information by the term out of the multiple terms that is categorized as a term that allows an image to be detected by searching for the term. As a result, the information processor 100 is able to search for material information of a sightseeing spot.

In the information processor 100, the sightseeing information is the sightseeing spot. As a result, the information processor 100 is able to search for material information of a sightseeing spot.

In addition, in the information processor 100, each of the multiple terms is a term that is searched for as the inputted term or as the term related to the inputted term. As a result, even when the inputted term is non-specific, the information processor 100 is able to provide the user with the material search result.

The information processor 100 uses the inputted term to search for the term that relates to the inputted term and obtains the multiple related-terms as the search result and the inputted term. As a result, even when the inputted term is non-specific, the information processor 100 is able to provide the user with the material search result.

### [Embodiment 2]

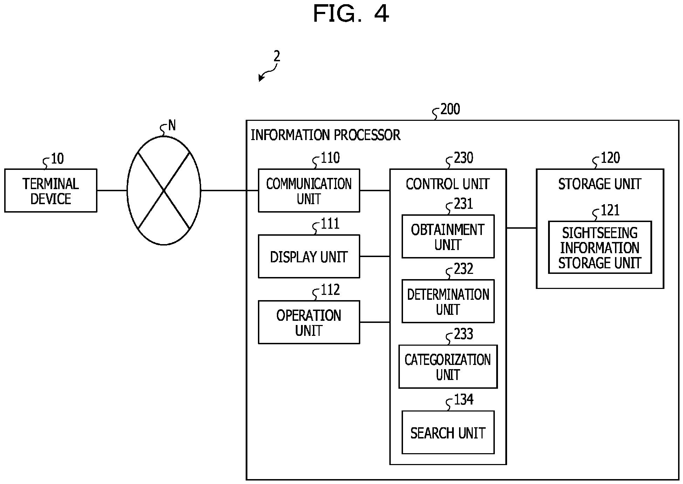

In the above Embodiment 1, the related-term is obtained by searching for the search term inputted by the user on the search engine, and the multiple terms are obtained; however, input of multiple terms from the user may be accepted. An embodiment of this case is described as Embodiment 2. FIG. 4 is a block diagram that illustrates an example of a configuration of an information processing system of Embodiment 2. An information processing system 2 illustrated in FIG. 4 has the terminal device 10 and an information processor 200. Note that the same configuration as that of the information processing system 1 of Embodiment 1 is applied with the same reference sign, and descriptions of the duplicated configurations and operations are omitted.

Comparing with the control unit 130 of the information processor 130 of Embodiment 1, a control unit 230 of the information processor 200 of Embodiment 2 has an obtainment unit 231, a determination unit 232, and a categorization unit 233 instead of the obtainment unit 131, the determination unit 132, and the categorization unit 133.

Once receiving the multiple search terms from the terminal device 10 via the network N and the communication unit 110, the obtainment unit 231 accepts the received multiple search terms. The obtainment unit 231 outputs the accepted multiple search terms to the determination unit 232.

Once the multiple search terms are inputted from the obtainment unit 231, the determination unit 232 selects one search term out of the inputted multiple search terms. The determination unit 232 searches for the selected search term on the predetermined term search website. Note that the predetermined term search website is similar to that of Embodiment 1. Likewise Embodiment 1, the determination unit 232 searches the term search website and extracts an image associated with the search term. The determination unit 232 outputs the search term and the success or failure of the image extraction to the categorization unit 233.

Once the unsearch determination instruction is inputted from the categorization unit 233, the determination unit 232 determines whether there is an unsearched search term. When it is determined that there is an unsearched search term, the determination unit 232 selects a next search term from the search term group, and returns to the processing of searching the predetermined term search website. When it is determined that all of the search terms are searched for, the determination unit 232 outputs a search instruction to the search unit 134.

Based on the search term as well as the success or failure of the image extraction inputted from the determination unit 232, the categorization unit 232 categorizes the inputted search term. When the categorization unit 233 categorizes the search term as the one that does not allow the image extraction, it is assumed that the search term is an immaterial conceptual term. In this case, the categorization unit 233 destroys the search term and outputs the unsearch determination instruction to the determination unit 232 so that the determination unit 232 determines whether there is an unsearched search term.

When the categorization unit 233 categorizes the search term as the one that allows the image extraction, it is assumed that the search term is a material search term. In this case, the categorization unit 233 temporarily stores the material search term as the material search term group into the storage unit 120, and outputs the unsearch determination instruction to the determination unit 232 so that the determination unit 232 determines whether there is an unsearched search term. In other words, the categorization unit 232 categorizes the search term by temporarily storing the material search term as the material search term group into the storage unit 120 and destroying the immaterial search term.

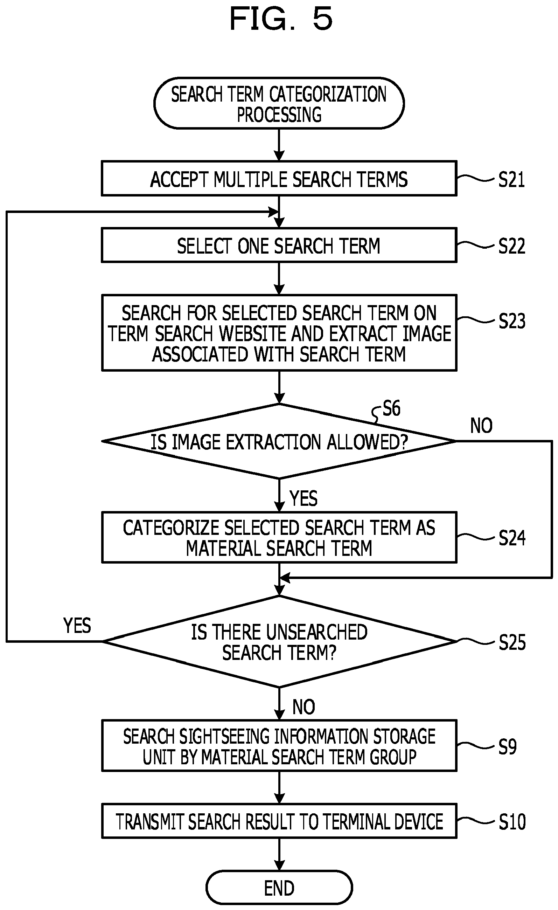

Next, an operation of the information processor 200 of Embodiment 2 is described. FIG. 5 is a flowchart that illustrates an example of search term categorization processing of Embodiment 2. Since the processing in steps S9 and S10 of the search term categorization processing is similar to that of Embodiment 1, descriptions thereof are omitted in the following description.

Once the multiple search terms are inputted from the user, the terminal device 10 transmits the inputted multiple search terms to the information processor 200. Once receiving the multiple search terms from the terminal device 10, the obtainment unit 231 of the information processor 200 accepts the received multiple search terms (step S21). The obtainment unit 231 outputs the accepted multiple search terms to the determination unit 232.

Once the multiple search terms are inputted from the obtainment unit 131, the determination unit 232 selects one search term out of the inputted multiple search terms (step S22). The determination unit 232 searches for the selected search term on the term search website and extracts an image associated with the search term (step S23). The determination unit 232 outputs the search term and the success or failure of the image extraction to the categorization unit 233.

Based on the search term as well as the success or failure of the image extraction inputted from the determination unit 232, the categorization unit 233 categorizes the search term. In other words, the categorization unit 233 determines whether the search term allows the image extraction (step S6). When it is determined that the image extraction is not allowed (step S6: No), the categorization unit 233 destroys the search term since it is assumed to be an immaterial conceptual term, and outputs the unsearch determination instruction to the determination unit 232. Then the process proceeds to step S25.

When it is determined that the image extraction is allowed (step S6: Yes), since the selected search term is a material search term, the categorization unit 233 temporarily stores that search term as the material search term group into the storage unit 120 (step S24). In addition, the categorization unit 233 outputs the unsearch determination instruction to the determination unit 232 so that the determination unit 232 determines whether there is an unsearched search term. Then the process proceeds to step S25.

Once the unsearch determination instruction is inputted from the categorization unit 233, the determination unit 232 determines whether there is an unsearched search term (step S25). When the determination unit 232 determines that there is an unsearched search term (step S25: Yes), the process returns to step S22. When the determination unit 232 determines that all of the search terms are searched for (step S25: No), the determination unit 232 outputs the search instruction to the search unit 134. In this way, based on the multiple search terms inputted by the user, the information processor 200 is able to provide the user of the terminal device 10 with a material search result as sightseeing information.

Note that, although the name and description of a sightseeing spot are used as an example of the sightseeing information in the above embodiments, it is not limited thereto. For example, the sightseeing information may include information on the sightseeing spot such as a location, average stay time, an image, a feature, a date and time, and a fee. In addition, the sightseeing information may include information on transportation to the sightseeing spot such as a name of a train line, a time table, and a fee, for example. Further, the sightseeing information may include a tour and its information such as a name, a schedule, a date and time, the minimal number of members, and a fee.

Although a Japanese webpage and website are used as the predetermined term search website in the above embodiment, it is not limited thereto. For example, the language may be different such as English.

The illustrated components of the units do not have to be physically constructed as the illustrated configurations. In other words, a specific form of distribution and integration of each unit is not limited to the illustrated form, and the entire unit or a part of the unit may be constructed by functionally or physically distributing or integrating by arbitrary unit in accordance with some types of loads and usage. For example, the determination unit 132 and the categorization unit 133 may be integrated with each other. In addition, the illustrated processing is not limited to the above order, and may be executed concurrently or in different order without contradicting the processing contents.

Further, as for the processing functions performed by the devices, entirety of each processing function or any part of the processing function may be executed on the CPU (or a microcomputer such as the MPU, a micro controller unit (MCU), and the like). Needless to say, entirety of each processing function or any part of the processing function may be executed on a program that is analyzed by the CPU (or a microcomputer such as the MPU, the MCU, and the like) or on hardware using wired logic.

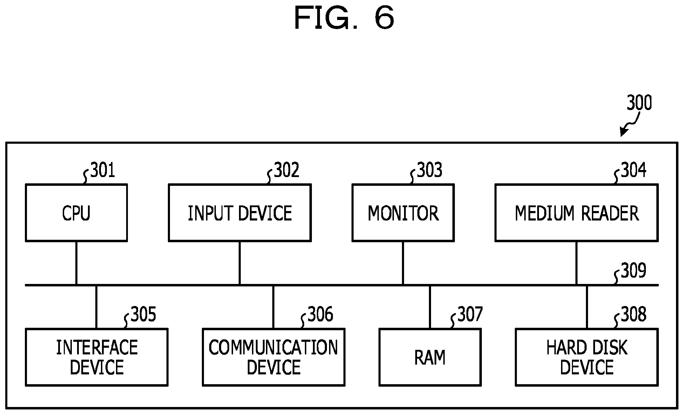

Incidentally, the processing described in the above embodiments may be implemented by executing a program prepared in advance using a computer. Thus, hereinafter, an example of the computer that executes a program having a function similar to that of the above embodiment is described. FIG. 6 is a diagram that illustrates an example of a computer that executes a search term categorization program.

As illustrated in FIG. 6, a computer 300 has a CPU 301 that executes computation processing, an input device 302 that accepts data input, and a monitor 303. In addition, the computer 300 has a medium reader 304 that reads a program and the like from a storage medium, an interface device 305 that couples the computer 300 to another device, and a communication device 306 that couples the computer 300 to another information processor and the like wired or wirelessly. Moreover, the computer 300 has a RAM 307 that temporarily stores some types of information, and a hard disk device 308. The devices 301 to 308 are coupled to a bus 309.

The hard disk device 308 stores a search term categorization program having a function similar to that of each of the processing units of the obtainment unit 131, the determination unit 132, the categorization unit 133, and the search unit 134 illustrated in FIG. 1. In addition, the hard disk device 308 may store a search term categorization program having a function similar to that of each of the processing units of the obtainment unit 231, the determination unit 232, the categorization unit 233, and the search unit 134 illustrated in FIG. 4. Moreover, the hard disk device 308 stores the sightseeing information storage unit 121 and some types of data for implementing the search term categorization program. The input device 302 accepts input of the some types of information such as operation information from a manager of the computer 300, for example. The monitor 303 displays a screen such as a display screen to the manager of the computer 300, for example. The interface device 305 is coupled with a printer and the like, for example. The communication device 306 has a function similar to that of the communication unit 110 illustrated in FIG. 1 and is coupled with the network N to communicate the some types of information with the terminal device 10, for example.

The CPU 301 performs the processing by reading each of the programs stored in the hard disk device 308 and then decompressing and executing the program in the RAM 307. In addition, these programs may make the computer 300 serve as the obtainment unit 131, the determination unit 132, the categorization unit 133, and the search unit 134 illustrated in FIG. 1. Moreover, these programs may make the computer 300 serve as the obtainment unit 231, the determination unit 232, the categorization unit 233, and the search unit 134 illustrated in FIG. 4.

Note that the above search term categorization program does not have to be stored in the hard disk device 308. For example, the computer 300 may read and execute a program stored in a storage medium that is readable by the computer 300. The storage medium that is readable by the computer 300 corresponds to a portable record medium such as a CD-ROM, a DVD disc, and a Universal Serial Bus (USB) memory, a semiconductor memory such as a flash memory, as well as a hard disk drive, for example. In addition, the search term categorization program may be stored in the device coupled with a public line, the Internet, a LAN, and the like, and the computer 300 may read and execute that search term categorization program therefrom.

### [Reference Signs List]

1, 2information processing system
10terminal device
100, 200information processor
110communication unit
111display unit
112operation unit
120storage unit
121sightseeing information storage unit
130, 230control unit
131, 231obtainment unit
132, 232determination unit
133, 233categorization unit
134search unit
Nnetwork

## Claims

1. A method of searching information performed by a computer, the method comprising:
obtaining a plurality of terms;
performing a first search on each of the obtained plurality of terms;
executing determination processing to determine whether an image is detected for each of the plurality of terms in the first search;
based on a result of the determination processing, identifying a first term among from the plurality of terms for which the image is detected in the first search, and a second term among from the plurality of terms for which the image is not detected in the first search;
performing a second search based on the identified first term; and
obtaining information detected by the second search.

2. The method according to claim 1, wherein
the second search is not performed for the second term.

3. The method according to claim 2, wherein
the first search is performed by utilizing a term search website.

4. The method according to claim 2, wherein
the second search is a search for sightseeing information.

5. The method according to claim 4, wherein
the sightseeing information is a sightseeing spot.

6. The method according to claim 2, wherein
each of the plurality of terms is at least one of a term inputted to the computer and a related-term that relates to the inputted term.

7. The method according to claim 6, further comprising:
identifying the related-term that relates to the inputted term by using the inputted term.

8. An information processing apparatus comprising:
a memory; and
a processor coupled to the memory and configured to:
obtain a plurality of terms,
perform a first search on each of the obtained plurality of terms;
execute determination processing to determine whether an image is detected for each of the plurality of terms in the first search,
based on a result of the determination processing, identify a first term among from the plurality of terms for which the image is detected in the first search, and a second term among from the plurality of terms for which the image is not detected in the first search,
perform a second search based on the identified first term, and
obtain information detected by the second search.

9. The information processing apparatus according to claim 8, wherein the processor is configured not to perform the second search for the second term.

10. The information processing apparatus according to claim 9, wherein the processor is configured to perform the first search by utilizing a term search website.

11. The information processing apparatus according to claim 9, wherein the second search is a search for sightseeing information.

12. A non-transitory computer-readable storage medium storing a program that causes an information processing apparatus to execute a process, the process comprising:
obtaining a plurality of terms;
performing a first search on each of the obtained plurality of terms;
executing determination processing to determine whether an image is detected for each of the plurality of terms in the first search;
based on a result of the determination processing, identifying a first term among from the plurality of terms for which the image is detected in the first search, and a second term among from the plurality of terms for which the image is not detected in the first search;
performing a second search based on the identified first term; and
obtaining information detected by the second search.

13. The non-transitory computer-readable storage medium according to claim 12, wherein
the second search is not performed for the second term.

14. The non-transitory computer-readable storage medium according to claim 13, wherein
the first search is performed by utilizing a term search website.

15. The non-transitory computer-readable storage medium according to claim 13, wherein
the second search is a search for sightseeing information.

## Amended claims

### Amended claims in accordance with Rule 137(2) EPC.

1. A method of searching information performed by a computer, the method comprising:
obtaining a plurality of terms;
performing a first search on each of the obtained plurality of terms;
executing determination processing to determine whether an image is detected for each of the plurality of terms in the first search;
based on a result of the determination processing, identifying a first term from the plurality of terms for which the image is detected in the first search, and a second term from the plurality of terms for which the image is not detected in the first search;
deleting the second term from the plurality of terms;
performing a second search based on each of the plurality of the terms from which the second term has been deleted; and
obtaining information detected by the second search.

2. The method according to claim 1, wherein
the second search is not performed for the second term.

3. The method according to claim 2, wherein
the first search is performed by utilizing a term search website.

4. The method according to claim 2, wherein
the second search is a search for sightseeing information.

5. The method according to claim 4, wherein
the sightseeing information is a sightseeing spot.

6. The method according to claim 2, wherein
each of the plurality of terms is at least one of a term inputted to the computer and a related-term that relates to the inputted term.

7. The method according to claim 6, further comprising:
identifying the related-term that relates to the inputted term by using the inputted term.

8. An information processing apparatus comprising:
a memory; and
a processor coupled to the memory and configured to:
obtain a plurality of terms,
perform a first search on each of the obtained plurality of terms;
execute determination processing to determine whether an image is detected for each of the plurality of terms in the first search,
based on a result of the determination processing, identify a first term from the plurality of terms for which the image is detected in the first search, and a second term from the plurality of terms for which the image is not detected in the first search,
delete the second term from the plurality of terms,
perform a second search based on each of the plurality of the terms from which the second term has been deleted, and
obtain information detected by the second search.

9. The information processing apparatus according to claim 8, wherein
the processor is configured not to perform the second search for the second term.

10. The information processing apparatus according to claim 9, wherein
the processor is configured to perform the first search by utilizing a term search website.

11. The information processing apparatus according to claim 9, wherein
the second search is a search for sightseeing information.

12. A non-transitory computer-readable storage medium storing a program that causes an information processing apparatus to execute a process, the process comprising:
obtaining a plurality of terms;
performing a first search on each of the obtained plurality of terms;
executing determination processing to determine whether an image is detected for each of the plurality of terms in the first search;
based on a result of the determination processing, identifying a first term from the plurality of terms for which the image is detected in the first search, and a second term from the plurality of terms for which the image is not detected in the first search;
deleting the second term from the plurality of terms;
performing a second search based on each of the plurality of the terms from which the second term has been deleted; and
obtaining information detected by the second search.

13. The non-transitory computer-readable storage medium according to claim 12, wherein
the second search is not performed for the second term.

14. The non-transitory computer-readable storage medium according to claim 13, wherein
the first search is performed by utilizing a term search website.

15. The non-transitory computer-readable storage medium according to claim 13, wherein
the second search is a search for sightseeing information.
